(19) Europäisches Patentamt / European Patent Office / Office européen des brevets

(11) EP 3 004 282 B1

(12) EUROPEAN PATENT SPECIFICATION

(45) Date of publication and mention of the grant of the patent: **21.06.2017 Bulletin 2017/25**

(21) Application number: **14732741.5**

(22) Date of filing: **22.05.2014**

(51) Int Cl.: ***C09K 8/594*** *(2006.01)*

(86) International application number: **PCT/US2014/039142**

(87) International publication number: **WO 2014/193730 (04.12.2014 Gazette 2014/49)**

# (54) ENHANCED OIL RECOVERY METHOD EMPLOYING A BIODEGRADABLE BRINE TOLERANT FOAM-FORMING COMPOSITION

VERFAHREN ZUR ERHÖHTEN ÖLGEWINNUNG MIT EINER BIOLOGISCH ABBAUBAREN LAUGENTOLERANTEN SCHAUMBILDENDEN ZUSAMMENSETZUNG

PROCÉDÉ AMÉLIORÉ DE RÉCUPÉRATION DE PÉTROLE UTILISANT UNE COMPOSITION ÉMULSIVE TOLÉRANTE À L'EAU SALÉE ET BIODÉGRADABLE

(84) Designated Contracting States: **AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2013 US 201361829532 P**

(43) Date of publication of application: **13.04.2016 Bulletin 2016/15**

(73) Proprietor: **Dow Global Technologies LLC**
**Midland, MI 48674 (US)**

(72) Inventors:
- **ABOELELLA, Nermeen, W.** **Pearland, TX 77584 (US)**
- **ABBAS, Sayeed** **Houston, TX 77077 (US)**
- **POINDEXTER, Michael, K.** **Sugar Land, TX 77478 (US)**
- **SANDERS, Aaron, W.** **Missouri City, TX 77459 (US)**

(74) Representative: **Andrews, Paul David**
**Murgitroyd & Company**
**Scotland House**
**165-169 Scotland Street**
**Glasgow G5 8PL (GB)**

(56) References cited:
**WO-A1-93/04265** **WO-A1-94/18431**
**WO-A1-02/092963** **WO-A2-2011/008570**
**CN-A- 102 660 251** **US-A- 4 860 828**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 004 282 B1

## Description

FIELD OF THE INVENTION

This invention relates to a foam-forming composition and method of use thereof for enhanced oil recovery. Specifically, the foam-forming composition comprises an anionic sulfonate surfactant wherein the anionic sulfonate surfactant is biodegradable and has low aquatic toxicity. Said foam-forming composition may optionally comprise an alpha-olefin sulfonate.

BACKGROUND OF THE INVENTION

The present invention relates to a composition and method for enhancing the recovery of petroleum from an oil-bearing formation.

In the recovery of oil from reservoirs, the use of primary production techniques (i.e., the use of only the initial formation energy to recover the crude oil) followed by the secondary technique of waterflooding, recovers only a portion of the original oil present in the formation.

Moreover, the use of certain enhanced oil recovery (EOR) techniques is also known in the art. These techniques can generally be classified as either a thermally based recovery technique, e.g., utilizing steam, or a gas drive method that can be operated under miscible or non-miscible conditions.

The gases which are commonly employed in gas-drive methods include for example, nitrogen, carbon dioxide, methane, mixtures of methane with ethane, propane, butane, and higher hydrocarbon homologues. This class of gases includes both natural gas and produced gas.

A typical procedure involves injecting a slug of $CO_2$ followed by the injection of a higher viscosity fluid such as water to "push" the $CO_2$; see, for example, the discussion in USP 2,623,596. Moreover, USP 3,065,790 indicates that this process may be more cost effectively employed if the slug of $CO_2$ is relatively small. In fact, as illustrated by USP 3,529,668, this type of recovery procedure is typically performed in "water alternating gas (WAG)" cycles.

Because of the viscosity and density differences between the $CO_2$ and the oil (i.e., viscosity of $CO_2$ is only 5 to 10 percent of the viscosity of light oil), the $CO_2$ tends to bypass much of the oil when flowing through the pores of the reservoir rock.

One proposed solution to this problem associated with the bypassing of the $CO_2$ includes the injection of water which contains a surfactant, with the $CO_2$. In particular, surfactants have been proposed as a means for generating a foam or an emulsion in the formation. See, for example, USP 4,380,266; 4,860,828; and USP 5,502,538.

The purpose of this foam is to divert the flow of the $CO_2$ into that portion of the formation containing high oil saturation.

One surfactant composition includes alpha-olefin sulfonate (AOS) surfactants and in particular $C_{12}$ AOS, i.e., an AOS having a carbon chain length of 12.

Furthermore, although AOS surfactants are largely known as "good foamers", the creation of an effective foam requires that the surfactant be completely soluble in the injection water. Solubility is limited when employing AOS having longer chain lengths, i.e., greater than about $C_{10}$, by the amount of salt in the injection water or formation brine. This is a particular problem when the salt concentration is above about 15 weight percent.

In such environments, the AOS can separate out and become adsorbed onto the formation rock. Thus, any foam which is formed is not effectively propagated through the reservoir.

There is a need for suitable foam-forming composition comprising foaming agents with improved brine tolerance which may be used alone or in conjunction with existing surfactants, such as AOS surfactants. Moreover, there is a need for brine tolerant foam-forming compositions that are environmentally friendly that will allow enhanced oil recovery in a safe and efficient manner.

SUMMARY OF THE INVENTION

The present invention is such a foam-forming composition and method of use for enhanced oil recovery wherein the foam-forming composition exhibits improved brine tolerance, is biodegradable, and has low aquatic toxicity.

In one aspect, the present invention is a foam-forming composition and method of using said foam-forming composition to recover hydrocarbons from a reservoir during gas injection into said reservoir comprising the steps of:

(a) at least periodically injecting gas and a foam-forming composition into a reservoir wherein the foam-forming composition comprises an effective foam-forming amount of an anionic surfactant of the formula I:

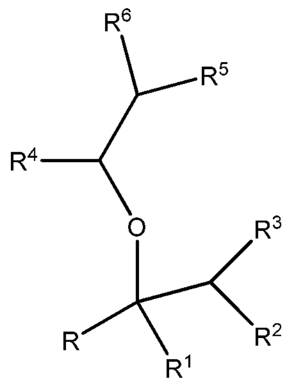

(I)

wherein R is linear or branched $C_2$-$C_{22}$ alkyl, preferably linear $C_4$-$C_{16}$ alkyl;
$R^1$, $R^2$, and $R^3$ are independently H or linear or branched $C_1$-$C_{18}$ alkyl, preferably H;
$R^4$ is H, $CH_2SO_3^-M^+$, or $CH_2OH$;
$R^5$ is OH, $SO_3^-M^+$, or a group of the formula:

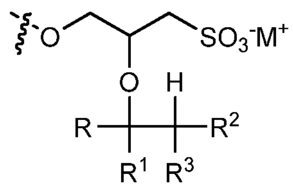

;

$R^6$ is H, $CH_2SO_3^-M^+$, or $CH_2OH$, preferably H; and
$M^+$ is $H^+$, or a monovalent or divalent cation,
wherein one of $R^4$ and $R^6$ is H and wherein one or two of $R^4$, $R^5$, and $R^6$ contains $SO_3^-M^+$ and

(b) contacting hydrocarbons in the reservoir with the foam and the gas so as to assist in the recovery of hydrocarbons from the reservoir.

In a preferred embodiment, the anionic surfactant is: sodium 2-hexan-2-yloxypropane-1,3-disulfonate; sodium 2-hexan-2-yloxy-3-hydroxypropane-1-sulfonate; sodium 2-octan-2-yloxypropane-1,3-disulfonate; sodium 2-octan-2-yloxy-3-hydroxypropane-1-sulfonate; sodium 2-decan-2-yloxypropane-1,3-disulfonate; sodium 2-decan-2-yloxy-3-hydroxypropane-1-sulfonate; sodium 2-dodecan-2-yloxypropane-1,3-disulfonate; sodium 2-dodecan-2-yloxy-3-hydroxypropane-1-sulfonate; sodium 2-tetradecan-2-yloxypropane-1,3-disulfonate; sodium 2-tetradecan-2-yloxy-3-hydroxypropane-1-sulfonate; sodium 2-hexadecan-2-yloxypropane-1,3-disulfonate; sodium 2-hexadecan-2-yloxy-3-hydroxypropane-1-sulfonate; sodium 2-octadecan-2-yloxypropane-1,3-sulfonate; sodium 2-octadecan-2-yloxy-3-hydroxypropane-1-sulfonate; or mixtures of two or more thereof.

The method described herein above wherein the foam-forming composition further comprises one or more alpha olefin sulfonate, said one or more alpha olefin sulfonate preferably having from 10 to 18 carbons, more preferably 12 carbons, preferably the one or more alpha olefin sulfonate comprises both hydroxy-sulfonates and alkene-sulfonates.

DETAILED DESCRIPTION OF THE PREFERRED EMBODIMENTS

The present invention relates to a method and composition for enhancing the recovery of oil from oil-bearing formations, or reservoir, and in particular, compositions including brine with a total dissolved solids (TDS) content from about 10 to 15 weight percent to as high as about 20 to 25 weight percent. Furthermore, it can be employed in a reservoir having temperatures as high as 121.1 °C (250 °F) with typical temperatures of reservoirs in which it is employed being above about 37.8 °C (100 °F). This method utilizes a foam-forming composition which can be effectively employed with gas. In particular, this foam-forming composition includes one or more anionic surfactant of formula I:

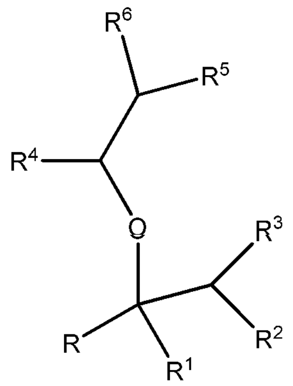

(I)

wherein R is linear or branched $C_2$-$C_{22}$ alkyl;
$R^1$, $R^2$, and $R^3$ are independently H or linear or branched $C_1$-$C_{18}$ alkyl;
$R^4$ is H, $CH_2SO_3^-M^+$, or $CH_2OH$;
$R^5$ is OH, $SO_3^-M^+$, or a group of the formula:

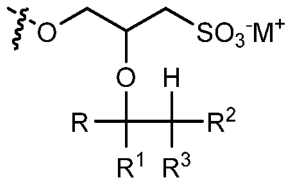

;

$R^6$ is H, $CH_2SO_3^-M^+$, or $CH_2OH$; and
$M^+$ is $H^+$ or a monovalent or divalent cation, such as sodium, potassium, ammonium, calcium, magnesium, or alkylated ammonium,
wherein one of $R^4$ and $R^6$ is H and wherein one or two of $R^4$, $R^5$, or $R^6$ contains $SO_3^-M^+$.

The processes described below for preparing the surfactants of the invention may result in the formation of mixtures of compounds of formula I. Although the individual compounds of formula I may be isolated from the mixture, this step is not necessary, and indeed it is sometimes preferred that the surfactant be used in the form of the mixture. Thus, surfactants that are mixtures of compounds of formula I are contemplated and are within the scope of the invention.

Preferred surfactants of formula I include compounds of formula I-1 (or mixtures thereof), which are compounds of formula I wherein R is linear $C_2$-$C_{22}$ alkyl. Further preferably, R is linear or branched, more preferably linear, $C_4$-$C_{16}$ alkyl.

Preferred compounds of formulae I and I-1 include compounds of formula I-2, which are compounds of formula I or I-1 wherein $R^1$ is H.

Preferred compounds of formulae I, I-1, and I-2 include compounds of formula I-3, which are compounds of formula I, I-1 or I-2 wherein $R^2$ is H.

Preferred compounds of formulae I, I-1, I-2, and I-3 include compounds of formula I-4, which are compounds of formula I, I-1, I-2 or I-3 wherein $R^3$ is H.

Preferred compounds of formulae I, I-1, I-2, I-3, and I-4 include compounds of formula I-5, which are compounds of formula I, I-1, I-2, I-3, or I-4 wherein $R^4$ is $CH_2SO_3^-M^+$ or $CH_2OH$. In one embodiment, $R^4$ is preferably $CH_2SO_3^-M^+$. In another embodiment, $R^4$ is preferably $CH_2OH$.

Preferred compounds of formulae I, I-1, I-2, I-3, I-4, and 1-5 include compounds of formula I-6, which are compounds of formula I, I-1, I-2, I-3, I-4, or I-5 wherein $R^5$ is OH or $SO_3^-M^+$. In one embodiment, $R^5$ is preferably $SO_3^-M^+$. In another embodiment, $R^5$ is preferably OH.

Preferred compounds of formulae I, I-1, I-2, I-3, I-4, I-5, and I-6 include compounds of formula I-7, which are compounds of formula I, I-1, I-2, I-3, I-4, I-5, or I-6 wherein $R^6$ is H.

Preferred compounds of formulae I, I-1, I-2, I-3, I-4, I-5, I-6, and I-7 include compounds of formula I-8, which are compounds of formula I, I-1, I-2, I-3, I-4, I-5, I-6, or I-7 wherein $M^+$ is $H^+$ or a monovalent cation. Further preferably, $M^+$ is $H^+$, $Na^+$, $K^+$, ammonium or alkylated ammonium. Particularly preferred is $Na^+$.

Preferred compounds of formula I further include compounds of formula II:

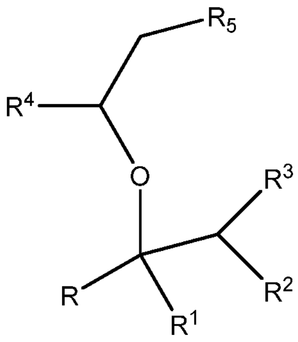

(II)

wherein R is linear or branched $C_2$-$C_{22}$ alkyl;
$R^1$, $R^2$, and $R^3$ are independently H or linear or branched $C_1$-$C_{18}$ alkyl;
$R^4$ is $CH_2SO_3^-M^+$ or $CH_2OH$;
$R^5$ is OH or $SO_3^-M^+$; and
$M^+$ is $H^+$, or a monovalent or divalent cation, wherein one or both of $R^4$ and $R^5$ contains $SO_3^-M^+$.

Preferred compounds of formula II include compounds of formula II-1, which are compounds of formula II wherein R is linear $C_2$-$C_{22}$ alkyl. Further preferably, R is linear or branched, more preferably linear, $C_4$-$C_{16}$ alkyl.
Preferred compounds of formulae II and II-1 include compounds of formula II-2, which are compounds of formula II or II-1 wherein $R^1$, $R^2$, and $R^3$ are each H.
Preferred compounds of formulae II, II-1, and II-2 include compounds of formula II-3, which are compounds of formula II, II-1, or II-2 wherein $R^4$ is $CH_2SO_3^-M^+$ and $R^5$ is OH.
Preferred compounds of formulae II, II-1, and II-2 include compounds of formula II-4, which are compounds of formula II, II-1, or II-2 wherein $R^4$ is $CH_2SO_3^-M^+$ and $R^5$ is $SO_3^-M^+$.
Preferred compounds of formulae II, II-1, II-2, II-3, and II-4 include compounds of formula II-5, which are compounds of formula I, II, II-1, II-2, II-3, or II-4 wherein $M^+$ is $H^+$ or a monovalent cation. Further preferably, $M^+$ is $H^+$, $Na^+$, $K^+$, ammonium or alkylated ammonium. Particularly preferred is $Na^+$.
In some embodiments of the invention, the compounds of formula I are of the formula III:

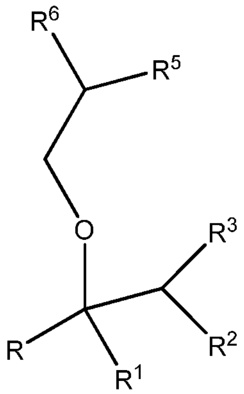

(III)

wherein R is linear or branched $C_2$-$C_{22}$ alkyl;
$R^1$, $R^2$, and $R^3$ are independently H or linear or branched $C_1$-$C_{18}$ alkyl;
$R^5$ is OH or $SO_3^-M^+$;
$R^6$ is $CH_2SO_3^-M^+$ or $CH_2OH$; and
$M^+$ is $H^+$, or a monovalent or divalent cation, wherein one or both of $R^5$ and $R^6$ contains $SO_3^-M^+$.

Preferred compounds of formula III include compounds of formula III-1, which are compounds of formula III wherein R is linear $C_2$-$C_{22}$ alkyl. Further preferably, R is linear or branched, more preferably linear, $C_4$-$C_{16}$ alkyl.
Preferred compounds of formulae III and III-1 include compounds of formula III-2, which are compounds of formula III or III-1 wherein $R^1$, $R^2$, and R are each H.
Preferred compounds of formulae III, III-1, and III-2 include compounds of formula III-3, which are compounds of formula III, III-1, or III-2 wherein $R^5$ is OH and $R^6$ is $CH_2SO_3^-M^+$.
Preferred compounds of formulae III, III-1, and III-2 include compounds of formula III-4, which are compounds

of formula III, III-1, or III-2 wherein $R^5$ is $SO_3^-M^+$ and $R^6$ is $CH_2OH$.

Preferred compounds of formulae III, III-1, and III-2 include compounds of formula III-5, which are compounds of formula III, III-1, or III-2 wherein $R^5$ is $SO_3^-M^+$ and $R^6$ is $CH_2SO_3^-M^+$.

Preferred compounds of formulae III, III-1, III-2, III-3, III-4, and III-5 include compounds of formula III-6, which are compounds of formula I, III, III-1, III-2, III-3, III-4, or III-5 wherein $M^+$ is $H^+$ or a monovalent cation. Further preferably, $M^+$ is $H^+$, $Na^+$, $K^+$, ammonium or alkylated ammonium. Particularly preferred is $Na^+$.

Preferred anionic surfactants of the invention include the compounds shown in Table 1:

Table 1

| Name | Structure |
|---|---|
| Sodium 2-hexan-2-yloxypropane-1,3-disulfonate | 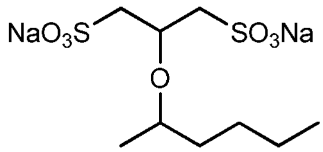 |
| Sodium 2-hexan-2-yloxy-3-hydroxypropane-1-sulfonate | 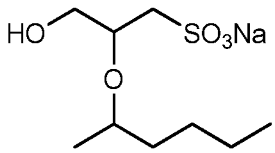 |
| Sodium 2-octan-2-yloxypropane-1,3-disulfonate | 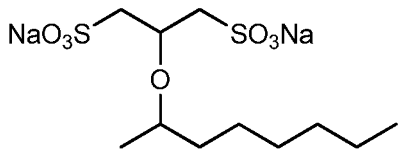 |
| Sodium 2-octan-2-yloxy-3-hydroxypropane-1-sulfonate | 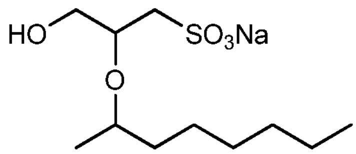 |
| Sodium 2-decan-2-yloxypropane-1,3-disulfonate | 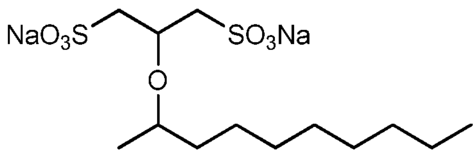 |
| Sodium 2-decan-2-yloxy-3-hydroxypropane-1-sulfonate | 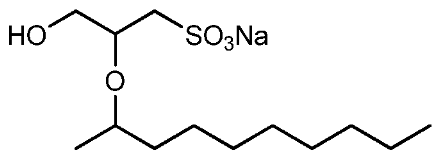 |
| Sodium 2-dodecan-2-yloxypropane-1,3-disulfonate | 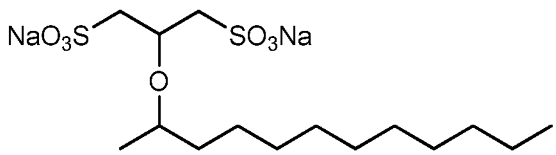 |
| Sodium 2-dodecan-2-yloxy-3-hydroxypropane-1-sulfonate | 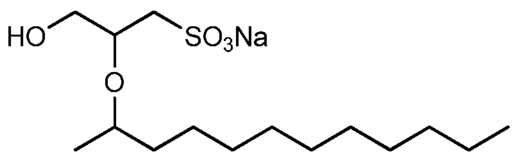 |

(continued)

| Name | Structure |
|---|---|
| Sodium 2-tetradecan-2-yloxypropane-1,3-disulfonate | 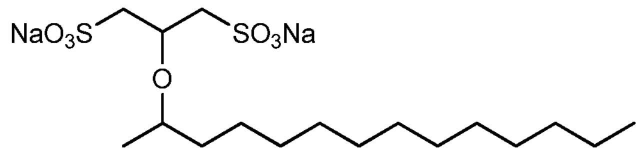 |
| Sodium 2-tetradecan-2-yloxy-3-hydroxypropane-1-sulfonate | 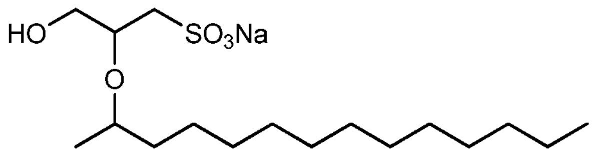 |
| Sodium 2-hexadecan-2-yloxypropane-1,3-disulfonate | 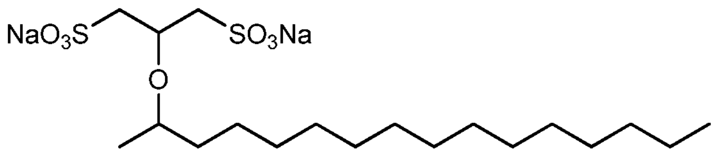 |
| Sodium 2-hexadecan-2-yloxy-3-hydroxypropane-1-sulfonate | 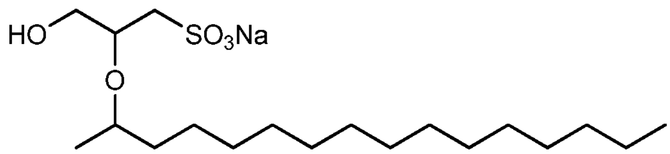 |
| Sodium 2-octadecan-2-yloxypropane-1,3-disulfonate | 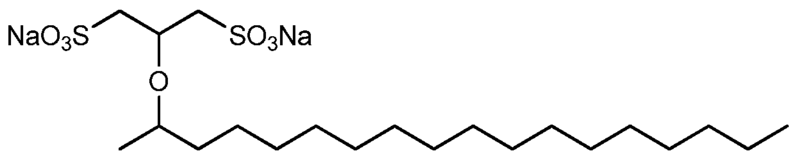 |
| Sodium 2-octadecan-2-yloxy-3-hydroxypropane-1-sulfonate | 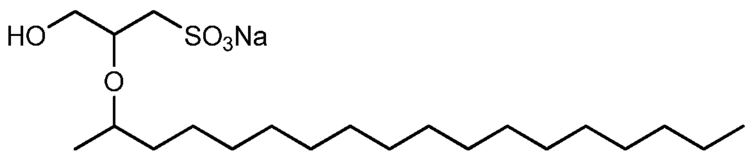 |

In addition to substitution of the alkyl chain at the 2-position as depicted in Table 1, also preferred are structures wherein substitution is at any of the other secondary carbons of the alkyl chain. Further preferred are isomeric mixtures of such compounds.

As discussed above, the processes for preparing the surfactants of the invention may result in the formation of mixtures of compounds of formula I, which can optionally be used directly as surfactants without the need for separation into individual compounds.

By way of example, one preferred mixture comprises: a compound of formula I containing one sulfonate and one hydroxy group; and a compound of formula I containing two sulfonate groups. A further example is a composition comprising a compound of formula II-3, and a compound of formula II-4.

Another preferred composition comprises an isomeric mixture comprising two or more compounds of formula I wherein the alkyl backbone (formed by R, $R^1$, $R^2$, and $R^3$ and the carbons to which they are attached) is substituted by the ether at least two different secondary carbons.

The anionic surfactants of the present invention are environmentally friendly and exhibit desirable traits with respect to suspension stability (e.g., tolerance to brine), low aquatic toxicity, and they are biodegradable.

Aquatic Toxicity procedures and test methods are based on the recommendations of the following guidelines: Organization for Economic Cooperation and Development (OECD): OECD Guidelines for the Testing of Chemicals, "Freshwater Alga and Cyanobacteria, Growth Inhibition Test", Procedure 201, adopted 23 March 2006; European Economic Community (EEC): Commission directive 92/69/EEC of 31 July 1992, Methods for the determination of ecotoxicity, C.3., "Algal Inhibition Test". Preferably the surfactants of the present invention have a toxicity profile ($EC_{50}$) > 1 and </=10 mg/l; more preferably an $EC_{50}$ > 10 and </=100 mg/l; and most preferably an $EC_{50}$ > 100 mg/l.

Biodegradability is evaluated using the OECD Guideline 301F "Manometric Respirometry Test". This test evaluates the aerobic biodegradability of organic materials in a defined aqueous medium by a defined inoculum for 28 days. Preferably, the surfactants of the present invention have a degradation level equal to or greater than 60% within the 28 days of the test.

The foam-forming composition of the present invention may further comprise one or more alpha-olefin sulfonate. Alpha-olefin sulfonates (AOS) useful in the practice of this invention are those which are derived from alpha-olefins having from about 10 to 18 carbon atoms, preferably about 14 to 16 carbon atoms, most preferably 12 carbon atoms. The olefins may be linear, branched or alicyclic with linear olefins being preferred. Methods to produce AOS are well known, for example AOS may be synthesized by the reaction of the alpha-olefins with sulfur trioxide. This reaction may be conducted according to methods well-known in the chemical arts typically by contact of a flow of dilute sulfur trioxide vapor with a thin film of liquid olefin at a temperature in the range of from about 5°C to about 50°C. The reaction between the $SO_3$ and the olefin yields an intermediate, believed to be in the nature of a sultone which is subsequently hydrolyzed by reaction with water and neutralized by reaction with a base. Mixtures of AOS are useful in the practice of this invention.

The foam-forming composition of the present invention may comprise, for example, a $C_{10-18}$ AOS composition. In as far as AOS compositions typically include a combination of sulfonate components, by "$C_{10-12}$ " it is meant that an alpha-olefin sulfonate includes one or more of $C_{10}$ alpha-olefin sulfonate and $C_{12}$ alpha-olefin sulfonate. Similarly, by "$C_{10-18}$ " it is meant that the alpha-olefin sulfonate composition includes one or more alpha-olefin sulfonates having a chain length of 10 to 18 carbon atoms.

A preferred foam-forming composition of the present invention comprising a mixture of an anionic surfactant of the formula I and a $C_{12}$ AOS demonstrates good foamability and solubility in brines containing up to 20 to 25 weight percent total dissolved solids (TDS).

The choice of the particular AOS composition to be employed in the present invention depends on balancing foamability against brine tolerance in the desired environment. Foamability increases with the length of the carbon chain whereas, brine tolerance decreases. See, for example, USP 4,769,730 to Suzuki. Accordingly, the particular additional AOS composition is selected based upon the certain practical factors, i.e., cost and the oil-bearing formation in which it is to be employed.

AOS typically includes both hydroxy-sulfonates and alkene-sulfonates. The hydroxy sulfonates include both 3-hydroxy and 4-hydroxy sulfonates while the alkene-sulfonates include alkene-1-sulfonates (alkene-1), alkene-2-sulfonates (alkene-2), alkene-3-sulfonates (alkene-3), alkene-4-sulfonates (alkene-4), alkene-5-sulfonates (alkene-5), alkene-6-sulfonates (alkene-6), alkene-7-sulfonates (alkene-7) and alkene-8-sulfonates (alkene-8). Alkene-di sulfonates can also be present in the AOS.

Preferably, the foam forming composition of the present invention is an aqueous solution comprising from 10 to 60 weight percent surfactants. The foam-forming composition of the present invention comprises one or more anionic surfactant of the formula I and optionally one or more AOS surfactant. If an AOS surfactant is present, the weight ratio of the anionic surfactant of the formula I:AOS surfactant may be 5:1, 4:1, 3:1, 2:1, 1:1, 1:2, 1:3, 1:4, or 1:5.

The foam-forming composition of the present invention may also contain minor amounts of other surface active agents. For example, co-surfactants such as amphoteric surfactants, scale inhibitors, AOS dimers, and/or chelating agents, may be present. The total amount of these additional surface active agents is preferably not greater than about 10 percent by weight of the total weight of the combined weight of the anionic surfactant of the formula I and the AOS surfactant, if present.

In using the foam foaming composition of the present invention for the enhanced recovery of oil, the foam foaming composition is added to and diluted with the down-hole aqueous diluent. The foam may either be preformed or formed "in situ" (e.g., through introduction of alternate slugs of gas and foam-forming composition into the formation). In either method, any of the procedures recognized in the art for injecting a foam into a formation may be employed. Moreover, although the composition of the oil-bearing formation is not critical to the present invention, it finds particular utility in sandstone reservoirs.

It is to be understood by those skilled in the art that this composition can be used either in water-alternate-gas (WAG) mode or drive recovery methods under either miscible or immiscible conditions. For example, the foam foaming composition of the present invention may be used in a method of recovering oil from a reservoir during gas injection into said reservoir comprising the steps of: at least periodically injecting gas and said foam-forming composition into a reservoir and contacting hydrocarbons in the reservoir with the foam and the gas so as to assist in the recovery of hydrocarbons from the reservoir.

The gas which can be employed includes any of those known in the art, e.g., carbon dioxide ($CO_2$), nitrogen ($N_2$), methane ($CH_3$), or flue gas or mixtures of hydrocarbons such as methane with any of ethane, propane, or butane, or flue gas. The choice of aqueous diluent, generally referred to as water, is typically the produced water, e.g., from the reservoir, but the source may be different, based upon the requirements of the reservoir to be treated, economics, and compatibility of the composition upon dilution, for example fresh water, aquifer water, or reservoir brine produced from the well.

This invention will find particular applicability with brines having a TDS content of from about 0 to 25 weight percent, preferably with 0 to 20, and more preferably 10 to 20 weight percent.

The foam-forming composition of the present invention comprises one or more anionic surfactant of the formula I, optionally one or more AOS surfactant, an optional other surface active agents, and water. The foam foaming composition of the present invention is added to/diluted with the aqueous diluent, for example at the well head, such that the total effective amount of surfactant(s) (i.e., anionic surfactant of the formula I and AOS surfactant if present) in the down-hole aqueous diluent is from 0.0001 to 2 weight percent. Preferably, the amount of surfactant in the down-hole aqueous diluent is equal to or greater than 0.0001 weight percent, more preferably equal to or greater than 0.001 weight percent, more preferably equal to or greater than 0.01 weight percent, more preferably equal to or greater than 0.05 weight percent, and even more preferably equal to or greater than 0.08 weight percent.

Preferably the total amount of surfactant(s) in the down-hole aqueous diluent is equal to or less than 2 weight percent, more preferably equal to or less than 1 weight percent, more preferably equal to or less than 0.5 weight percent, more preferably equal to or less than 0.3 weight percent, and even more preferably equal to or less than 0.1 weight percent.

EXAMPLES

A suitable process for preparing the anionic surfactant of the present invention is given in detail in USP 8,304,377 and US Application No.: 20120078008. Said processes for preparing the surfactants of the invention may result in the formation of mixtures of compounds of formula I. Thus, surfactants that are mixtures of compounds of formula I are contemplated and are within the scope of the invention. As disclosed in USP 8,304,377, the composition of the mixture may be controlled by altering the sulfonation reaction conditions. Further, the surfactant reaction products formed may be used with or without further purification. The preparation of the C12 sulfonate below by said method illustrates the general procedure for the preparation of the anionic surfactants of the present invention:

Example 1

Etherification of 1-Dodecene with 1,3-Dichloro-2-propanol

A 2-L round-bottom flask with a magnetic stirrer is fitted into a heating mantle and connected to a distillate receiver. Distillate was condensed into the side arm distillate receiver containing a magnetic stirrer and temperature probe. A valved line between the distillate receiver and the 2-L flask gave a nominal volume of about 100 mL in the distillate receiver. Liquid was pumped from the bottom of the distillate receiver to a 53.3 cm (21 inches) long and 1.9 cm (3/4 inches) in diameter stainless steel tube fitted on each end with 90 μm screen filters to provide a catalyst bed. A jacket system covering the catalyst containing pipe was heated using a recirculating hot oil bath. The outlet of the catalyst bed returned liquid to the distillate receiver. The system was connected to a vacuum pump such that the reactive distillation could be carried out at pressures of 1.3 to 40 kPa (10 to 300 torr). The catalyst bed of the 2-L reactive distillation apparatus was charged with 60 g of DOWEX DR-2030. The 2-L vessel was charged with 684.72 g (5.304 mol) of 1,3-dichloro-2-propanol and 843.05 g (5.009 mol) of 1-dodecene. The vacuum was adjusted to 2.9 kPa (22 torr), and the 2-L vessel was heated to afford distillation at an initial temperature of 79 °C, with a vapor temperature of 70 °C. The catalyst bed oil bath was set to 110 °C to give a temperature in reaction product exiting the catalyst bed of 80-88 °C. The condenser temperature was about -11 °C to -5 °C. The distillate receiver temperature was 63 to 69 °C. With additional heating, the bottoms temperature reached 192 °C and the overhead temperature was 80 °C. The mixture was cooled and unloaded. The solution in the distillate receiver and catalyst bed (96.30 g, 6.3 percent of mass loaded) was discarded. The solution in the 2-L vessel (1302.33 g, 85.2 percent of mass loaded) was analyzed by GC analysis (1.803 area percent, 1.10 weight percent of dodecene, 0.708 area percent, 0.48 weight percent of dodecanol, 0.01 area percent, 0.03 weight percent of 1,3-dichloro-2-propanol, 89.843 area percent, 88.71 weight percent of the C12 1,3-dichloropropyl ether). A portion (1298.01) was loaded to a 2-L round-bottom flask and purified by distillation at 26.7 to 80 Pa (0.2 to 0.6 torr) using a 35.6 cm (14") vacuum-jacketed Vigreux column topped with a reflux splitter. The first fraction (30.36 g) was collected using a 15:1 reflux ratio at an overhead temperature of 25 to 105 °C with a bottoms temperature of 146-189 °C. The product fraction was collected using a 15:1 reflux ratio at an overhead temperature of 104 to 118 °C with a bottoms temperature of 190-220 °C to afford 1217.88 g (4.09 mol) of the 1,3-dichloropropyl ether of dodecane (1,3-dichloropropan-2-lyoxydodecane, 94.8 area percent C12 DCP ether, mixture of positional isomers, 93.8 percent distilled yield). A 42.10-g residue remained as the distillation bottoms.

Example 2

Preparation of $C_{12}$ Sulfonates with Sodium Sulfite/meta-Bisulfite

A 2L Parr reactor was charged with 135.5 g of 1,3-dichloro-2-propan-2-yloxydodecane, 98.66 g of sodium sulfite, 34.18 g of sodium meta-bisulfite, 30.66 g of sodium carbonate, 590 g of water, 200 °C. The crude reaction mixture is cooled to ambient temperature and unloaded to afford 865.3 g of light brown reaction product. The pH was 7.75. HPLC analysis of the aqueous solution found 9.14 weight percent (0.183 mol, 40 percent of theory) of sodium 2-(dodecanyloxy)propane-1,3-disulfonate ($C_{12}$ disulfonate) and 5.69 weight percent (0.142 mol, 31 percent of theory) of sodium 2-(dodecanyloxy)-3-hydroxypropane-1-sulfonate ($C_{12}$ monosulfonate). A 10.4 g portion was removed and extracted with 4.00 g of ethyl acetate. GC assay of the 2.77 g organic phase found 0.2 weight percent of dodecene (0.46 g in 865.3 g of solution, 0.34 percent of $C_{12}$ 1,3-dichloro-2-propanol ether charged), 1.98 weight percent of dodecanol (4.56 g in 865.3 g of solution, 0.0245 mol, 5.4 mol percent of $C_{12}$ 1,3-dichloro-2-propanol ether charged), and 1.35 weight percent of the $C_{12}$ 1,3-dichloro-2-propanol ether (3.11 g in 865.3 g of solution, 2.3 percent of $C_{12}$ 1,3-dichloro-2-propanol ether charged). The salt content is reduced and the surfactant concentration increased by extracting the crude reaction mixture with 1-butanol as disclosed in US Application No.: 20120078008 to providing a concentrated mixture of sulfonates.

Example 3

Isolation of Individual Surfactant Components

The individual surfactant components may be isolated from the sulfonate compositions of the invention. For example, a portion of the C12 sulfonate composition of Example 2 is charged to a column containing a C18 reverse phase chromatography resin and eluted with an aqueous solution of acetonitrile. Fractions containing the desired components are collected and evaporated to provide isolated solid samples of sodium 2-(dodecanyloxy)propane-1,3-disulfonate (C12 Disulfonate) and sodium 2-(dodecanyloxy)-3-hydroxypropane-1-sulfonate (C12 Monosulfonate).

Aquatic Tonicity

The study procedures and test methods for aquatic toxicity are based on the recommendations of the following guidelines: Organization for Economic Cooperation and Development (OECD): OECD Guidelines for the Testing of Chemicals, "Freshwater Alga and Cyanobacteria, Growth Inhibition Test", Procedure 201, adopted 23 March 2006; European Economic Community (EEC): Commission directive 92/69/EEC of 31 July 1992, Methods for the determination of ecotoxicity, C.3., "Algal Inhibition Test".

Data from the aquatic toxicity tests of the isolated and purified $C_{12}$ monosulfonate (sodium 2-(dodecanyloxy)-3-hydroxypropane-1-sulfonate) and $C_{12}$ disulfonate (sodium 2-(dodecanyloxy) propane-1,3-disulfonate) from Example 3 is shown in Table 2.

Table 2

| Example 3 | Fresh Water algal growth inhibition test with *Desmondesmus subspicatus* ErC50/0-3 | 48-hour Acute Toxicity to *Daphna magna* (EC50) |
|---|---|---|
| $C_{12}$ monosulfate component | > 100 mg/l | > 100 mg/l |
| $C_{12}$ disulfonate component | > 100 mg/l | > 100 mg/l |

Toxicity is reported in accordance with the categorization system used by US EPA: Very toxic ($EC_{50}$ </=0.1 mg/l); highly toxic ($EC_{50}$ > 0.1 and </=1 mg/l); moderately toxic ($EC_{50}$ > 1 and </=10 mg/l); slightly toxic ($EC_{50}$ > 10 and </=100 mg/l); practically nontoxic ($EC_{50}$ > 100 mg/l). The data shows that $C_{12}$ surfactants of the invention have highly favorable toxicity profiles.

Biodegradability

The ready biodegradability of Example 2 is evaluated using the OECD Guideline 301F "Manometric Respirometry Test". This test evaluates the aerobic biodegradability of organic materials in a defined aqueous medium by a defined inoculum for 28 days. The extent of biodegradation at any time during the experiment was based on $O_2$ consumption

and $CO_2$ evolution, and reported as % of calculated theoretical oxygen consumption and % of calculated theoretical $CO_2$, respectively, after blanks correction according to the following formulae:

$$\% \, Biodegradation(O_2)_{t,sample\ x} = \frac{mg\ O_2 consumed_{t,sample\ x} - mg\ O_2 consumed_{t,blanks}}{theoretical\ mg\ O_2\ consumption_{sample\ x}}$$

$$\% \, Biodegradation(CO_2)_{t,sample\ x} = \frac{mg\ CO_2 evolved_{t,sample\ x} - mg\ O_2 evolved_{t,blanks}}{theoretical\ mg\ CO_2\ evolution_{sample\ x}}$$

A MicroOxymax respirometer (Columbus Instruments) is used to determine $O_2$ and $CO_2$ headspace concentrations in each reaction vessel, using an electrochemical $O_2$ sensor and a non-dispersed infrared $CO_2$ detector. The inoculum used is activated sludge collected from the a wastewater treatment plan, which treats predominantly domestic waste. Enough activated sludge is added to mineral medium (as defined by the OECD Guideline 301F) to result in an inoculated mineral medium at 30ppm suspended solids concentration, which is aerated until use.

Blank reaction vessels are prepared in duplicate, and contained only inoculated mineral medium, without any organic material added. These blanks are used to estimate a correction to the samples and positive controls for baseline inoculum respiration. Positive control reaction vessels were prepared in duplicate by addition of a 2.5 mg/mL stock solution of sodium benzoate (a known readily biodegradable compound) to inoculated mineral medium, to reach a final theoretical $O_2$ demand of 100 mg/L as required by the OECD Guideline 301F. These positive controls are included within the experimental design to ensure the inoculum is suitable for the test. Sample reaction vessels are prepared each in duplicate by addition of an aqueous stock solution of each sample to test to inoculated mineral medium to reach a final theoretical $O_2$ demand of 100 mg/L.

The reaction vessels consisted of 300 mL glass bottles fitted with a magnetic stir bar, filled with about 150 ml aerated inoculated mineral medium to which the required amounts of sample, or sodium benzoate, is added to reach a 100 mg/l $O_2$ demand (*i. e.* theoretical mg $O_2$ consumption about 15 mg in every bottle but the blanks) as described above. After checking that the pH of each reaction medium is about 7.4 and adjusted as necessary; magnetic stirring is started at about 300 rpm, the reaction vessels are connected to the MicroOxymax respirometer, and the experiment is started. $O_2$ and $CO_2$ levels are measured in the headspace of each reaction vessel every 8 hours and computed into accumulated $CO_2$ evolution and $O_2$ consumption directly by the MicroOxymax software. The experiment is stopped after 28 days and the % biodegradation by $O_2$ and by $CO_2$ is computed. The 28 day % biodegradation for Example 2 duplicate samples is shown in Table 3.

Table 3

| | % Biodegradation | | | |
|---|---|---|---|---|
| | $CO_2$ | $CO_2$ | $O_2$ | $O_2$ |
| Example 2, crude | 48 | 47 | 78 | 77 |
| Example 2, concentrated | 53 | 53 | 75 | 80 |

To achieve classification of readily biodegradable product, according to the OECD definition, degradation must reach or exceed a 60% level within the 28 days of the test.

Salt Tolerance

Solutions containing a total of 0.5wt% surfactants in the fresh water, 14% and 18% NaCl solutions are prepared by adding in the required amount of surfactant in the water or brine solutions. Each sample is initially shaken then evaluated visually after a day for solubility (soluble (S) or insoluble (I)) and stability at room temperature (about 23°C) and then after 17 days. The AOS surfactant is a $C_{12}$ alpha olefin sulfonate available from Akzo Nobel. Results are recorded in Table 4.

Table 4

| | Day 1 | | | Day 17 | | |
|---|---|---|---|---|---|---|
| | wt % NaCl | | | wt % NaCl | | |
| Surfactant | 0 | 14 | 18 | 0 | 14 | 18 |
| AOS* | S | S | I | S | S | I |
| 4:1 AOS: Example 2 | S | S | S | S | S | S |
| 1:1 AOS: Example 2 | S | S | S | S | S | S |
| Example 2 | S | S | S | S | S | S |
| *Not an example of the present invention | | | | | | |

The results show that in higher concentrations of salt AOS-only solutions form precipitate while examples of the invention, Example 2 alone and as mixtures with AOS, all demonstrate good solubility in all salt concentrations.

Foam Testing.

Foam formation response testing is performed with a Model 6100 Formation Response Tester (FRT) available from Chandler Engineering. The FRT has one core holder which is used for performing these experiments. For the formation response testing a single core holder is used containing a single core comprising Berea sandstone available from Kocurek Industries measuring 3.8 cm (1.5 inch) diameter and 30.5 cm (12 inch) long having 115 mD permeability to 1% sodium chloride brine. The core is wrapped in SARAN™ WRAP and then placed inside a respective AFLAS™ 90 rubber sleeve which is inserted into the Hassler-type core holder. The confining pressure of the core is maintained at approximately 3447 kPa (500 psi) above the internal pressure. The core is heated to the desired temperature before fluids are injected. The fluids are preheated to the core temperature prior to injection to minimize heating and cooling effects in the core. A differential pressure transducer is used to measure pressure drop across core up to 345 kPa (50 psi). Pressure drops exceeding 345 kPa (50 psi) across the core are measured as a difference between the cell inlet and cell outlet pressure transducers.

The core was saturated with a 1:1 mixture of 1000 ppm Example 2 and 1000 ppm $C_{12}$ AOS surfactant (available from Akzo Nobel) in 18% NaCl brine. The foam formation response is performed under the following conditions: Mode of injection: co-injection; brine flow rate: 0.091 ml/min; $CO_2$ flow rate: 0.529 ml/min; foam quality: 85.3%; temperature: 52.2 °C (126 °F); backpressure regulator: 12066 kPa (1750 psi); and a 2000ppm surfactant concentration in the brine.

The testing is performed in the co-injection mode where the brine and $CO_2$ are simultaneously co-injected at the desired rates. Under these conditions an equilibrium pressure drop is obtained across the core. Typically a minimum of 8-12 hours is provided for steady state to be obtained. The pressure drop versus time for the 1:1 mixture of Example 2/AOS is shown in FIG. 1.

The rise in pressure drop over time indicates the formation of foam in the core.

**Claims**

**1.** A method of recovering oil from a reservoir during gas injection into said reservoir comprising the steps of:

(a) at least periodically injecting gas and a foam-forming composition into a reservoir wherein the foam-forming composition comprises an effective foam-forming amount of an anionic surfactant of the formula I:

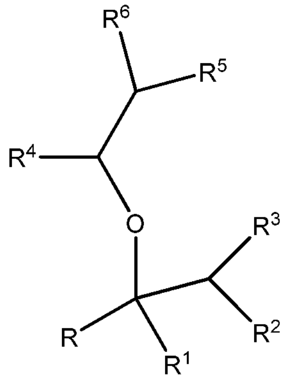

(I)

wherein R is linear or branched $C_2$-$C_{22}$ alkyl;
$R^1$, $R^2$, and $R^3$ are independently H or linear or branched $C_1$-$C_{18}$ alkyl;
$R^4$ is H, $CH_2SO_3^-M^+$, or $CH_2OH$;
$R^5$ is OH, $SO_3^-M^+$, or a group of the formula:

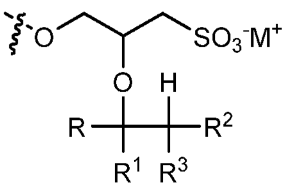

;

$R^6$ is H, $CH_2SO_3^-M^+$, or $CH_2OH$; and
$M^+$ is $H^+$, or a monovalent or divalent cation,
wherein one of $R^4$ and $R^6$ is H and wherein one or two of $R^4$, $R^5$, and $R^6$ contains $SO_3^-M^+$ and

(b) contacting hydrocarbons in the reservoir with the foam and the gas so as to assist in the recovery of hydrocarbons from the reservoir.

**2.** The method of Claim 1 wherein R is linear $C_4$-$C_{16}$ alkyl.

**3.** The method of Claim 1 wherein $R^1$, $R^2$, and $R^3$ are each H.

**4.** The method of Claim1 wherein $R^4$ is $CH_2SO_3^-M^+$ or $CH_2OH$, $R^5$ is $SO_3^-M^+$, and $R^6$ is H.

**5.** A method of Claim 1 wherein the anionic surfactant is: sodium 2-hexan-2-yloxypropane-1,3-disulfonate; sodium 2-hexan-2-yloxy-3-hydroxypropane-1-sulfonate; sodium 2-octan-2-yloxypropane-1,3-disulfonate; sodium 2-octan-2-yloxy-3-hydroxypropane-1-sulfonate; sodium 2-decan-2-yloxypropane-1,3-disulfonate; sodium 2-decan-2-yloxy-3-hydroxypropane-1-sulfonate; sodium 2-dodecan-2-yloxypropane-1,3-disulfonate; sodium 2-dodecan-2-yloxy-3-hydroxypropane-1-sulfonate; sodium 2-tetradecan-2-yloxypropane-1,3-disulfonate; sodium 2-tetradecan-2-yloxy-3-hydroxypropane-1-sulfonate; sodium 2-hexadecan-2-yloxypropane-1,3-disulfonate; sodium 2-hexadecan-2-yloxy-3-hydroxypropane-1-sulfonate; sodium 2-octadecan-2-yloxypropane-1,3-disulfonate; sodium 2-octadecan-2-yloxy-3-hydroxypropane-1-sulfonate; or mixtures of two or more thereof.

**6.** The method of Claim 1 wherein the foam-forming composition further comprises one or more alpha olefin sulfonate, said one or more alpha olefin sulfonate having from 10 to 18 carbons.

**7.** The method of Claim 6 wherein the one or more alpha olefin sulfonate comprises both hydroxy-sulfonates and alkene-sulfonates.

**8.** The method of Claim 7 wherein the one or more alpha olefin sulfonate has 12 carbons.

**Patentansprüche**

1. Ein Verfahren zum Gewinnen von Öl aus einer Lagerstätte während der Gaseinpressung in die Lagerstätte, beinhaltend die folgenden Schritte:

   (a) mindestens periodisches Einpressen von Gas und einer schaumbildenden Zusammensetzung in eine Lagerstätte, wobei die schaumbildende Zusammensetzung eine effektive schaumbildende Menge eines anionischen Tensids der Formel I beinhaltet:

   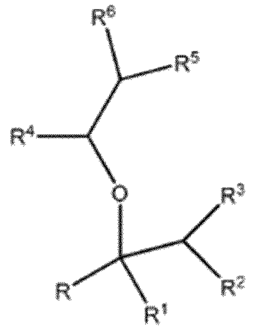

   (I)

   wobei R ein lineares oder verzweigtes $C_2$-$C_{22}$-Alkyl ist;
   $R^1$, $R^2$ und $R^3$ unabhängig H oder lineares oder verzweigtes $C_1$-$C_{18}$-Alkyl sind;
   $R^4$ H, $CH_2SO_3^-M^+$ oder $CH_2OH$ ist;
   $R^5$ OH, $SO_3^-M^+$ oder eine Gruppe der folgenden Formel ist:

   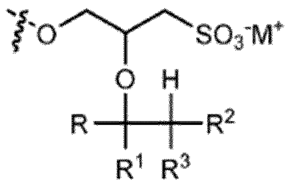

   ;

   $R^6$ H, $CH_2SO_3^-M^+$ oder $CH_2OH$ ist; und
   $M^+$ $H^+$ oder ein monovalentes oder bivalentes Kation ist;
   wobei eines von $R^4$ und $R^6$ H ist und wobei ein oder zwei von $R^4$, $R^5$ und $R^6$ $SO_3^-M^+$ enthält

   und

   (b) In-Kontakt-Bringen von Kohlenwasserstoffen in der Lagerstätte mit dem Schaum und dem Gas, um die Gewinnung von Kohlenwasserstoffen aus der Lagerstätte zu unterstützen.

2. Verfahren gemäß Anspruch 1, wobei R ein lineares $C_4$-$C_{16}$-Alkyl ist.

3. Verfahren gemäß Anspruch 1, wobei $R^1$, $R^2$ und $R^3$ jeweils H sind.

4. Verfahren gemäß Anspruch 1, wobei $R^4$ $CH_2SO_3\ {}^-M^+$ oder $CH_2O$ ist, $R^5$ $SO_3^-M^+$ ist und $R^6$ H ist.

5. Verfahren gemäß Anspruch 1, wobei das anionische Tensid Folgendes ist: Natrium-2-hexan-2-yloxypropan-1,3-disulfonat; Natrium-2-hexan-2-yloxy-3-hydroxypropan-1-sulfonat; Natrium-2-octan-2-yloxypropan-1,3-disulfonat; Natrium-2-octan-2-yloxy-3-hydroxypropan-1-sulfonat; Natrium-2-decan-2-yloxypropan-1,3-disulfonat; Natrium-2-decan-2-yloxy-3-hydroxypropan-1-sulfonat; Natrium-2-dodecan-2-yloxypropan-1,3-disulfonat; Natrium-2-dodecan-2-yloxy-3-hydroxypropan-1-sulfonat; Natrium-2-tetradecan-2-yloxypropan-1,3-disulfonat; Natrium-2-tetradecan-2-yloxy-3-hydroxypropan-1-sulfonat; Natrium-2-hexadecan-2-yloxypropan-1,3-disulfonat; Natrium-2-hexadecan-2-yloxy-3-hydroxypropan-1-sulfonat; Natrium-2-octadecan-2-yloxypropan-1,3-disulfonat; Natrium-2-octadecan-2-yloxy-3-hydroxypropan-1-sulfonat oder Mischungen von zwei oder mehr davon.

**6.** Verfahren gemäß Anspruch 1, wobei die schaumbildende Zusammensetzung ferner ein oder mehrere alpha-Olefinsulfonate beinhaltet, wobei das eine oder die mehreren alpha-Olefinsulfonate 10 bis 18 Kohlenstoffe aufweisen.

**7.** Verfahren gemäß Anspruch 6, wobei das eine oder die mehreren alpha-Olefinsulfonate sowohl Hydroxysulfonate als auch Alkensulfonate beinhalten.

**8.** Verfahren gemäß Anspruch 7, wobei das eine oder die mehreren alpha-Olefinsulfonate 12 Kohlenstoffe aufweisen.

## Revendications

**1.** Une méthode de récupération de pétrole à partir d'un réservoir au cours d'une injection de gaz dans ledit réservoir comprenant les étapes consistant à :

(a) injecter au moins périodiquement du gaz et une composition formant une mousse dans un réservoir, la composition formant une mousse comprenant une quantité formant une mousse efficace d'un tensioactif anionique de formule I :

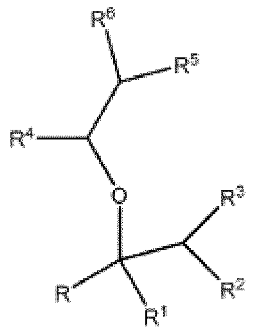

(I)

dans laquelle R est un alkyle en $C_2$-$C_{22}$ linéaire ou ramifié ;
$R^1$, $R^2$, et $R^3$ sont indépendamment H ou un alkyle en $C_1$-$C_{18}$ linéaire ou ramifié ;
$R^4$ est H, $CH_2SO_3^-M^+$, ou $CH_2OH$ ;
$R^5$ est OH, $SO_3^-M^+$, ou un groupe de formule :

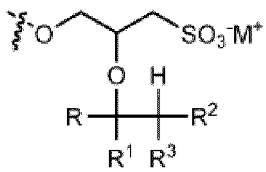

;

$R^6$ est H, $CH_2SO_3^-M^+$, ou $CH_2OH$ ; et
$M^+$ est $H^+$, ou un cation monovalent ou divalent,
dans laquelle un élément parmi $R^4$ et $R^6$ est H et dans laquelle un élément ou deux éléments parmi $R^4$, $R^5$, et $R^6$ contient $S0_3^-M^+$

et

(b) mettre en contact des hydrocarbures dans le réservoir avec la mousse et le gaz afin d'assister la récupération d'hydrocarbures à partir du réservoir.

**2.** La méthode de la revendication 1 dans laquelle R est un alkyle en $C_4$-$C_{16}$ linéaire.

**3.** La méthode de la revendication 1 dans laquelle $R^1$, $R^2$, et $R^3$ sont chacun H.

**4.** La méthode de la revendication 1 dans laquelle $R^4$ est $CH_2SO_3^-M^+$ ou $CH_2OH$, $R^5$ est $S0_3^-M^+$, et $R^6$ est H.

5. Une méthode de la revendication 1 dans laquelle le tensioactif anionique est : le sodium 2-hexan-2-yloxypropane-1,3-disulfonate ; le sodium 2-hexan-2-yloxy-3-hydroxypropane-1-sulfonate ; le sodium 2-octan-2-yloxypropane-1,3-disulfonate ; le sodium 2-octan-2-yloxy-3-hydroxypropane-1-sulfonate ; le sodium 2-décan-2-yloxypropane-1,3-disulfonate ; le sodium 2-décan-2-yloxy-3-hydroxypropane-1-sulfonate ; le sodium 2-dodécan-2-yloxypropane-1,3-disulfonate ; le sodium 2-dodécan-2-yloxy-3-hydroxypropane-1-sulfonate ; le sodium 2-tétradécan-2-yloxypropane-1,3-disulfonate ; le sodium 2-tétradécan-2-yloxy-3-hydroxypropane-1-sulfonate ; le sodium 2-hexadécan-2-yloxypropane-1,3-disulfonate ; le sodium 2-hexadécan-2-yloxy-3-hydroxypropane-1-sulfonate ; le sodium 2-octadécan-2-yloxypropane-1,3-disulfonate ; le sodium 2-octadécan-2-yloxy-3-hydroxypropane-1-sulfonate ; ou des mélanges de deux ou plus de ceux-ci.

6. La méthode de la revendication 1 dans laquelle la composition formant une mousse comprend en outre un sulfonate d'alpha oléfine ou plus, ledit un sulfonate d'alpha oléfine ou plus ayant de 10 à 18 carbones.

7. La méthode de la revendication 6 dans laquelle cet un sulfonate d'alpha oléfine ou plus comprend à la fois des hydroxy-sulfonates et des alcène-sulfonates.

8. La méthode de la revendication 7 dans laquelle cet un sulfonate d'alpha oléfine ou plus a 12 carbones.

# FIG. 1

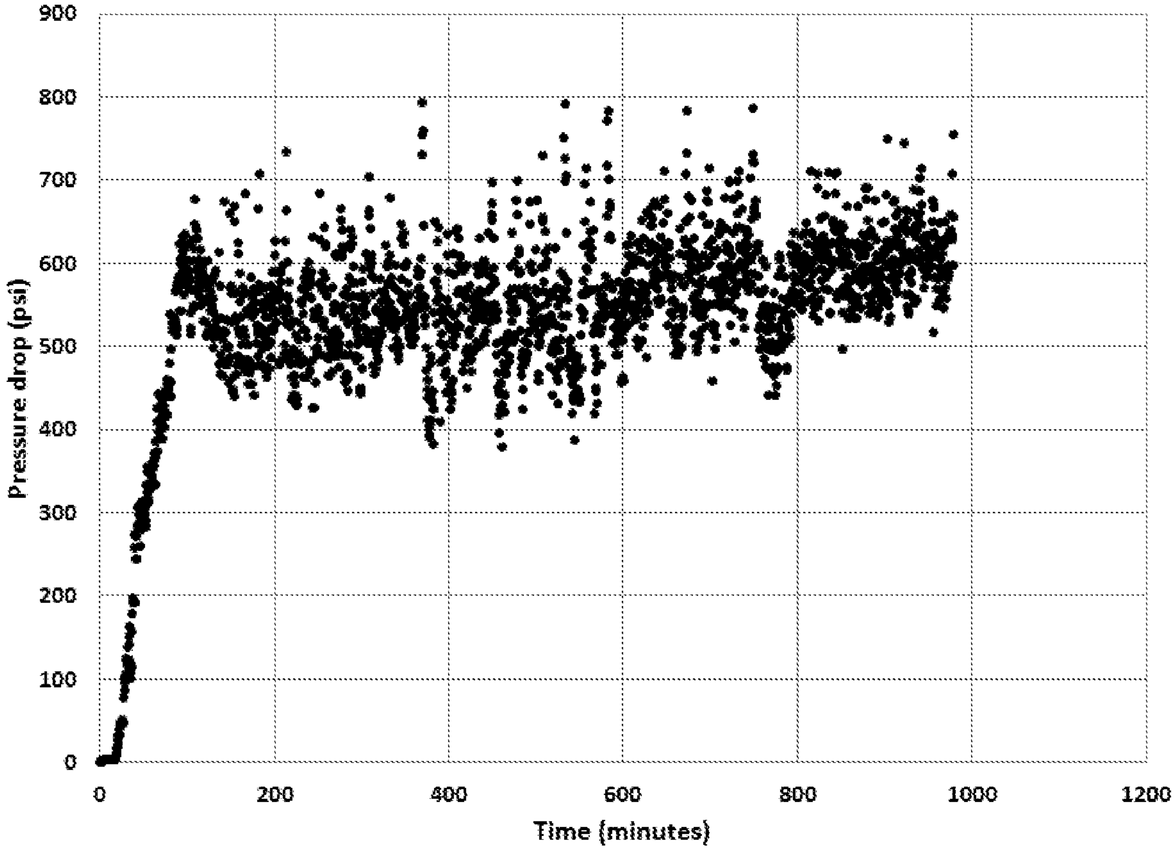
900
800
700
600
500
400
300
200
100
0
Pressure drop (psi)
0
200
400
600
800
1000
1200
Time (minutes)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US P2623596 A
- US P3065790 A
- US P3529668 A
- US P4380266 A
- US 4860828 A
- US P5502538 A
- US P4769730 A, Suzuki
- US P8304377 B
- US 20120078008 A


### Non-patent literature cited in the description


- Freshwater Alga and Cyanobacteria, Growth Inhibition Test. *Procedure 201,* 23 March 2006
- Methods for the determination of ecotoxicity, C.3. *Algal Inhibition Test,* 31 July 1992
- Freshwater Alga and Cyanobacteria, Growth Inhibition Test. *Testing of Chemicals,* 23 March 2006